# EUROPEAN PATENT APPLICATION

(11) **EP 4 350 462 A1**
(43) Date of publication of application: **10.04.2024**
(21) Application number: 23201673.3
(22) Date of filing: 04.10.2023
(51) Int. Cl.: G05D 1/02, G06Q 10/08

(54) **OBSTACLE DETECTION FUNCTIONALITY FOR MATERIAL HANDLING VEHICLES BASED ON LOCATION**

(30) Priority: 04.10.2022 US 202263413138 P
(71) Applicant: The Raymond Corporation, Greene, NY 13778 (US)
(72) Inventor: D'ACCOLTI, Anthony V., Manlius, NY, 13104 (US); McLACHLAN, Robert P., Walton, NY, 13856 (US); MURLI, Sathvik, Green Brook, NJ, 08812 (US)
(74) Representative: Zacco Sweden AB

(57) **Abstract**

A material handling vehicle and associated systems and methods involve controlling obstacle detection functionality for the material handling vehicle based on a location of the material handling vehicle. Multiple parameters for operating the material handling vehicle, such as various parameters related to obstacle detection functionality, can be controlled based on a specific zone within a facility that the material handling vehicle is in.

## Description

### CROSS-REFERENCES TO RELATED APPLICATIONS

This application is based on and claims priority to U.S. Provisional Patent Application No. 63/413,138 filed on October 4, 2022, the entire disclosure of which is incorporated herein by reference.

### BACKGROUND

Material handling vehicles (MHVs) have been developed to transport goods loaded onto generally standardized transport platforms. For example, forklifts can be used to lift goods loaded onto a pallet and move the goods between locations in a facility such as a warehouse or a factory. Some material handling vehicles, such as automated guided vehicles (AGVs), can operate autonomously without a human operator. Other material handling vehicles are non-autonomous.

For certain types of vehicles there are training requirements imposed by various government agencies, laws, rules and regulations. For example, the United States Department of Labor Occupational Safety and Health Administration (OSHA) imposes a duty on employers to train and supervise operators of various types of material handling vehicles. Recertification every three years is also required. In certain instances, refresher training in relevant topics shall be provided to the operator when required. In all instances, the operator remains in control of the material handling vehicle during performance of any actions. Further, a warehouse manager remains in control of the fleet of material handling vehicles within the warehouse environment. The training of operators and supervision to be provided by warehouse managers requires among other things proper operational practices including among other things that an operator remain in control of the material handling vehicle, pay attention to the operating environment, and always look in the direction of travel.

### BRIEF SUMMARY

The present disclosure relates generally to obstacle detection systems used on material handling vehicles.

In one aspect, the present disclosure provides a material handling vehicle including a sensor for gathering data associated with the material handling vehicle and a controller. The controller includes circuitry configured to determine a location of the material handling vehicle within a facility using the data from the sensor, determine a first parameter for operating the material handling vehicle based on a zone within the facility associated with the location, determine a second parameter for operating the material handling vehicle based on the zone within the facility associated with the location, and control operation of the material handling vehicle in accordance with the first parameter and the second parameter.

In another aspect, the present disclosure provides a system including a material handling vehicle operating in a facility, a sensor for gathering data associated with the material handling vehicle, a server connected to a network, and a controller connected to the network. The controller includes circuitry configured to determine a location of the material handling vehicle within the facility using the data from the sensor, transmit the location to the server via the network, receive a first parameter for operating the material handling vehicle from the server based on a zone within the facility associated with the location, receive a second parameter for operating the material handling vehicle from the server based on the zone within the facility associated with the location, and control operation of the material handling vehicle in accordance with the first parameter and the second parameter.

In yet another aspect, the present disclosure provides a method including receiving location data for a material handling vehicle within a facility, identifying a zone within the facility that the material handling vehicle is in using the location data, determining a first parameter for operating the material handling vehicle associated with the zone within the facility, determining a second parameter for operating the material handling vehicle associated with the zone within the facility, and providing the first parameter and the second parameter to the material handling vehicle for operation of the material handling vehicle in accordance with the first parameter and the second parameter.

The foregoing and other aspects and advantages of the present disclosure will appear from the following description. In the description, reference is made to the accompanying drawings which form a part hereof, and in which there is shown by way of illustration a preferred configuration of the disclosure. Such configuration does not necessarily represent the full scope of the disclosure, however, and reference is made therefore to the claims and herein for interpreting the scope of the present disclosure.

### BRIEF DESCRIPTION OF DRAWINGS

The present disclosure will be better understood and features, aspects, and advantages other than those set forth above will become apparent when consideration is given to the following detailed description thereof. Such detailed description references the following drawings.
FIG. 1 is a block diagram illustrating components of an example system for controlling obstacle detection functionality of a material handling vehicle based on location, according to some aspects of the disclosure.
FIG. 2 is an illustration of different locations within a facility where obstacle detection functionality of a material handling vehicle can be controlled, according to some aspects of the disclosure.
FIG. 3 is a flow diagram illustrating an example process for controlling obstacle detection functionality of a material handling vehicle based on location, according to some aspects of the disclosure.

### DETAILED DESCRIPTION

Before any aspects of the present disclosure are explained in detail, it is to be understood that the present disclosure is not limited in its application to the details of construction and the arrangement of components set forth in the description or illustrated in the drawings. The present disclosure is capable of other aspects and of being practiced or of being carried out in various ways. Also, it is to be understood that the phraseology and terminology used herein is for the purpose of description and should not be regarded as limiting. The use of "including", "comprising", or "having", and variations thereof herein, is meant to encompass the items listed thereafter and equivalents thereof as well as additional items. Unless specified or limited otherwise, the terms "mounted", "connected", "supported", and "coupled", and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use aspects of the present disclosure. Various modifications to the illustrated aspects will be readily apparent to those skilled in the art, and the generic principles herein can be applied to other aspects and applications without departing from aspects of the present disclosure. Thus, aspects of the present disclosure are not intended to be limited to aspects shown but are to be accorded the widest scope consistent with the principles and features disclosed herein. The following detailed description is to be read with reference to the figures, in which like elements in different figures have like reference numerals. The figures, which are not necessarily to scale, depict selected aspects and are not intended to limit the scope of aspects of the present disclosure. Skilled artisans will recognize the examples provided herein have many useful alternatives and fall within the scope of aspects of the present disclosure.

It is also to be appreciated that material handling vehicles are designed in a variety of classes and configurations to perform a variety of tasks. It will be apparent to those of skill in the art that the present disclosure is not limited to any specific type of material handling vehicle, and can also be provided with various other types of material handling vehicle classes and configurations, including for example, lift trucks, forklift trucks, reach trucks, SWING REACH^{®} vehicles, turret trucks, side loader trucks, counterbalanced lift trucks, pallet stacker trucks, order pickers, transtackers, and man-up trucks, and can be commonly found in warehouses, factories, shipping yards, and, generally, wherever pallets, large packages, or loads of goods can be required to be transported from place to place. The various systems and methods disclosed herein are suitable for any of operator controlled, remotely controlled, and autonomously controlled material handling vehicles.

Material handling vehicles can include obstacle detection systems for detecting the presence of nearby obstacles that may affect navigation of the material handling vehicle. For example, obstacle detection systems can include various types of sensors for detecting pallets of goods located in a facility near a material handling vehicle, other material handling vehicles in the facility, and other types of obstacles relevant to the operation of the material handling vehicle. Location systems can also be used to limit vehicle travel based on vehicle spacing relative to obstacles in the external environment.

In automated guided vehicles, obstacle detection systems can be used to avoid contact with detected obstacles. These obstacle detection systems can use programmable logic controllers (PLCs) and leverage manufacturer provided software to prevent contact with the detected obstacles. In some instances, when the obstacle detection system for the automated guided vehicle is active, the detection system only operates using a single rule set. In these instances, no operational parameters of the obstacle detection system change based on any different factors associated with the operation of the automated guided vehicle. The obstacle detection system is simply turned on or turned off. For non-autonomous material handling vehicles, obstacle detection systems operate in a similar fashion, and are used for operator training reinforcement to reinforce proper operational practices.

Other systems such as in-aisle detection systems can look at both the "wire-guidance" status of a material handling vehicle and the "field infringement" status of a mounted sensing device. When the material handling vehicle is both "on-wire" and the sensing device is "infringed" (triggered), the in-aisle detection system can then provide a response. Telematics systems such as warehouse management systems can operate in a similar fashion where, if a setting for off-wire detection is disabled, the telematics system can similarly provide a response if the material handling vehicle is both "on-wire" and the sensing device is "infringed". However, if the setting for off-wire detection is enabled, a sensing device can be always turned on and follow a singular configuration ruleset, like the described operation of the automated guided vehicle obstacle detection system. The ruleset can include, for example, an action to slow the speed of the material handling vehicle to a predetermined limit if an obstacle above a preconfigured size is detected within the travel path of the material handling vehicle.

The approaches to obstacle detection described above are limited in application, and product configuration alterations are only changed or configurable at system initialization. The use of a single ruleset and constant operation of sensing devices can lead to operational inefficiencies such as energy waste, in addition to the creation of nuisances for operators. In practice, a more dynamic obstacle detection system that can adjust various operational parameters based on factors such as location within a facility can provide improved operational efficiency, flexibility, and performance. The perceived effectiveness of obstacle detection systems may be dependent upon the environment of function.

The present disclosure provides a method that can use location sensing technology in combination with obstacle sensing technology to apply different sensing configurations as a function of the location of the material handling vehicle. The sensing configurations can be defined by multiple operational parameters, such as target speed and minimum obstacle size, and can be adjusted based on the location of the material handling vehicle. The sensing configurations can also be modified as a function of other known obstacles in the environment, including other material handling vehicles. The system architecture enables any configuration parameter of the obstacle detection system to be altered as a function of the location of the material handling vehicle.

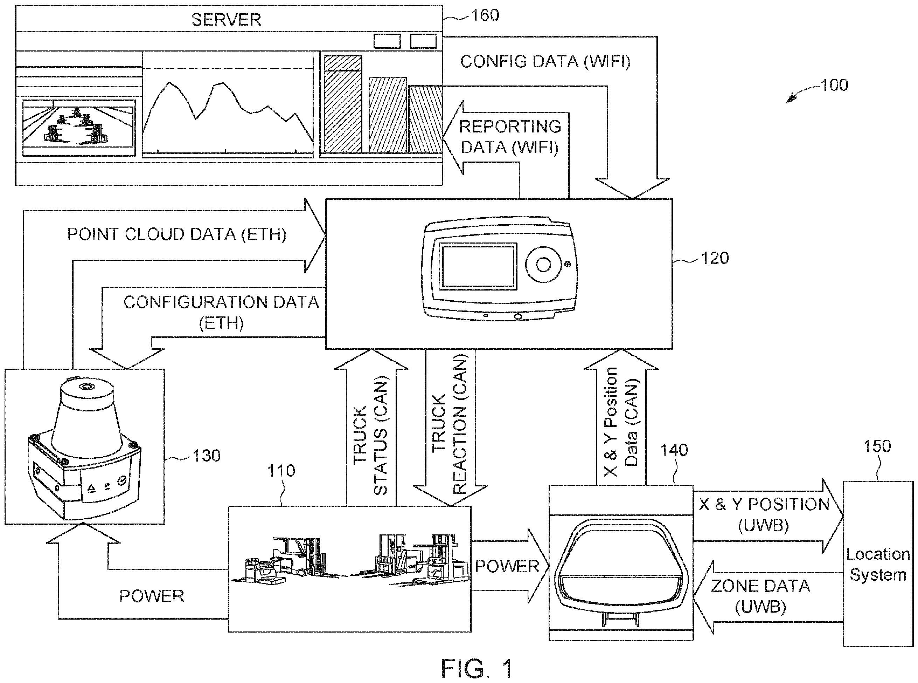

Referring to FIG. 1, an example system 100 for controlling obstacle detection functionality of a material handling vehicle based on location is shown. System 100 is shown to include a material handling vehicle 110, a controller 120, a sensor 130, a location tag 140, a location system 150, and a server 160. The architecture of system 100 enables any configuration parameter of an obstacle detection system on material handling vehicle 110 to be altered as a function of the location of material handling vehicle 110. The architecture of system 100 provides increased flexibility to multiple use cases simultaneously by allowing more flexibility in application and opening up new use cases that might not be considered using other architectures. System 100 can be used to protect infrastructure, reduce nuisance trips of obstacle detection systems, and to make obstacle detection systems more tenable on vehicles such as dock trucks and the like.

A variety of different configuration parameters for the obstacle detection system on material handling vehicle 110 can be altered by system 100 based on location. A target speed ("minsense") parameter can be adjusted to control the target speed of material handling vehicle 110 after detecting an obstacle, for example. The target speed can be used to slow material handling vehicle 110 to reduce risks associated with the detected obstacle. A delay parameter can be adjusted to control an amount of time required to elapse before changing the speed of material handling vehicle 110 (e.g., delay before speeding up). A minimum obstacle size parameter can be controlled to control the speed of material handling vehicle 100 based on the size of an obstacle detected by material handling vehicle 100 (e.g., a minimum size defined by height, width, etc. of a detected obstacle for a slowdown in speed to occur). A static buffer parameter can be adjusted to control a distance between material handling vehicle 110 and a detected obstacle that triggers a change in speed (e.g., slowdown to target speed occurs at a specific distance from a detected obstacle). A field width parameter can be adjusted to control the width of a detection area for material handling vehicle 110 (e.g., make narrower or wider, could also be taller or shorter, etc.). A pivot angle parameter can be adjusted to control the timing of a pivot action taken by material handling vehicle 110 to avoid a detected obstacle (e.g., begin the pivot earlier or later). A speed in steer parameter can be adjusted to enable or disable speed in steer functionality of material handling vehicle 110. Speed in steer functionality can be used to set speed limits for material handling vehicle 110 at certain steering angle thresholds and/or ranges. For example, speed in steer functionality can define a maximum speed limit of 5 miles per hour if material handling vehicle 110 is turning within an angle range of 10-20 degrees, and a maximum speed limit of 4 miles per hours if material handling vehicle 110 is turning within an angle range of 20-30 degrees. An enable detection parameter can be adjusted to turn obstacle detection functionality of material handling vehicle 110 on or off. Other possible parameters for an obstacle detection system on material handling vehicle 110 can be adjusted and are contemplated.

Material handling vehicle 110 can generally be any suitable type of material handling vehicle that operates within a facility. For example, material handling vehicle 110 can be an automated guided vehicle, a non-autonomous vehicle, a powered industrial truck, a lift truck, a forklift truck, a reach truck, a turret truck, a side loader truck, a counterbalanced lift truck, a pallet stacker truck, an order picker, a transtacker, a dock truck, a man-up truck, and the like. Material handling vehicle 110 can be powered using a variety of different types of batteries and can include various types of mechanical and electrical components. Material handling vehicle 110 generally has an obstacle detection system for detecting nearby obstacles and taking actions to avoid contact with any detected obstacles. The obstacle detection system provides obstacle avoidance functionality for material handling vehicle 110 and can help satisfy a variety of different requirements and regulations that may apply to the environment in which material handling vehicle 110 operates.

Controller 120 can be implemented in a variety of manners, and generally includes circuitry for collecting, sending, storing, and processing a variety of data associated with material handling vehicle 110. Controller 120 can be implemented as an iMONITOR device as used with an iWAREHOUSE^{®} system, both produced by The Raymond Corporation, for example, among other suitable types of controllers and computing devices. Controller 120 can include a display and one or more user input devices such as push buttons, a touch screen, light indicators, and the like. Controller 120 can include any suitable types of processors (e.g., microprocessor, CPU, GPU, etc.), memory (e.g., volatile, non-volatile, etc.), and communications interfaces and ports (e.g., hardware and/or firmware used to establish connections to one or more networks via USB, Wi-Fi, Ethernet, cellular, coaxial, fiber optic, etc.). Controller 120 can execute various control applications and other control algorithms stored in memory. In the implementation of system 100 illustrated in FIG. 1, controller 120 communicates with material handling vehicle 110 via a controller area network (CAN) bus, where controller 120 can send data including truck reactions to material handling vehicle 110 and receive data including truck status from material handling vehicle 110. Controller 120 can also send configuration data to sensor 130 and can receive point cloud data from sensor 130 via an ethernet or other connection. Controller 120 can also send reporting data to server 160 and can receive configuration data from server 160 via Wi-Fi (e.g., using a Wi-Fi module, gateway, etc.). Controller 120 can also receive position data from location tag 140 via a CAN bus. Controller 120 can provide multiple parameters for controlling obstacle detection functionality of material handling vehicle 110 in accordance with the multiple parameters.

Sensor 130 can be implemented in a variety of manners, and it will be appreciated that system 100 and various components within system 100 can be connected to additional sensors beyond sensor 130 as needed for various functions, whether for obstacle detection or otherwise. For example, sensor 130 can be implemented as a lidar sensor that targets obstacles or surfaces with a laser and determines variable distances associated with the obstacle based on the time it takes reflected light to return to sensor 130. Sensor 130 can also be implemented as a camera or other types of sensors that can be used in obstacle detection for material handling vehicles. Sensor 130 can be installed on material handling vehicle 110 and can include circuitry for generating, storing, processing, and sending data. Sensor 130 can be configured based on various parameters associated with sensor 130, such as a minimum obstacle size parameter, a field width parameter, and other types of parameters used in obstacle detection for material handling vehicle 110. Sensor 130 can be powered by material handling vehicle 110, or by other power sources such as various types of batteries.

Location tag 140 can be implemented in a variety of manners and is generally another sensor installed on material handling vehicle 110 for providing location data associated with material handling vehicle 110. Location tag 140 can include circuitry for generating, storing, processing, and sending data associated with the location of material handling vehicle 110. Similar location tags and/or badges can also be installed on other assets and/or carried by operators in the same facility as material handling vehicle 110. Location tag 140 can communicate using ultra-wideband (UWB) radio technology for short range, high bandwidth communications. The location data generated by location tag 140 can include two-dimensional coordinates (x, y) for material handling vehicle 110 within the facility for precise location tracking. Location tag 140 can receive power from material handling vehicle 110 or can be powered using a variety of different types of batteries.

Location system 150 can be implemented in a variety of manners, and generally can include a variety of different devices and associated hardware, software, firmware, etc. for managing location data in a facility. For example, location system 150 can be used for geofencing and zoning, vehicle tracking, and asset tracking, among other functions. In some implementations, location tag 140 and other similar locations tags and/or badges communicate with a plurality of network anchor devices installed in fixed locations throughout a facility using ultra-wideband radio communications. The anchor devices can provide a reference point for location tag 140 to calculate the precise location of material handling vehicle 110, for example. The anchor devices can then communicate with a bridge device (gateway) that aggregates location data from the anchor devices and sends the location data to a location server. The location server can be installed on-premises, located remotely (cloud server), or a combination of both. Location system 150 in some implementations is an iWAREHOUSE^{®} Real-Time Location System or another similar type of system. Location system 150 can receive location data from location tag 140 and send zone data to location tag 140 using ultra-wideband radio communications, for example.

Server 160 can be implemented in a variety of manners, and generally includes circuitry such as processors, memory, and communications ports and interfaces, as well as software and firmware for managing various types of data associated with the facility in which material handling vehicle 110 operates. In some implementations, server 160 is an iWAREHOUSE^{®} server that hosts the iWAREHOUSE RED^{™} software platform, or another similar type of server and associated software. Server 160 can be installed on-premises, located remotely (cloud server), or a combination of both. Server 160 can receive reporting data from controller 120 and send configuration data to controller 120 using Wi-Fi communications, for example. Server 160 can be configured to present a user interface on a user device for providing data about operator and material handling vehicle performance in real time, as well as generating reports using historical data, among other functions.

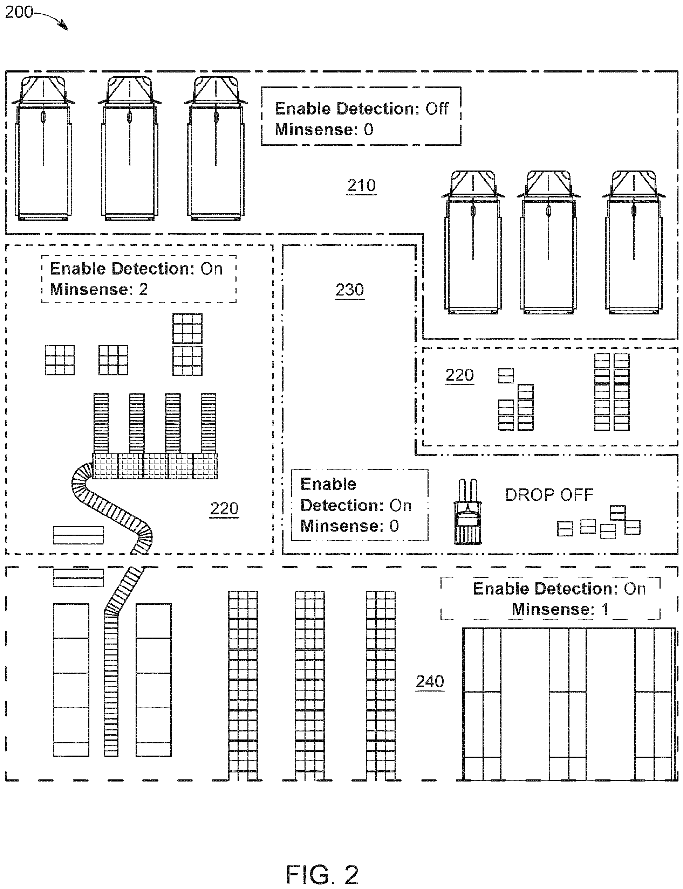

Referring to FIG. 2, an illustration of different locations within an example facility 200 where obstacle detection functionality of a material handling vehicle can be controlled is shown. System 100 can be implemented within facility 200, for example. Facility 200 can be any type of facility where pallets, large packages, or loads of goods can be required to be transported from place to place, such as a warehouse, a factory, a shipping yard, and the like. Different regions of facility 200 can be more or less congested relative to other regions. Also, depending on the type of facility, material handling vehicle 110 can encounter obstacles of different types and sizes. The obstacle detection system on material handling vehicle 110 can be adjusted. In the example facility 200, material handling vehicle 110 can be a stand-up counterbalance truck.

A first zone of facility 200 is a trailer area 210, where ideally the obstacle detection functionality of material handling vehicle 110 would be turned off. A stand-up counterbalance truck may operate predominantly in the forks-first direction of a highly congested trailer environment. In this environment, it may be preferred that the obstacle detection system does not provide any tractor-first detection, as this detection is a nuisance to the operator of the vehicle. When material handling vehicle 110 is in trailer area 210 of facility 200, the enable detection parameter can be turned off and the target speed (minsense) parameter can be set to zero miles per hour for example. These parameters are suitable for trailer area 210 because typically material handling vehicle 110 may not experience much traffic in trailer area 210. Other parameters such as the delay parameter, the minimum obstacle size parameter, the static buffer parameter, the field width parameter, the pivot angle parameter, and the speed in steer parameter can likewise be adjusted in a similar manner due to the location of material handling vehicle in the trailer area 210 of facility 200.

A second zone of facility 200 is a dock area 220, where ideally the obstacle detection functionality of material handling vehicle 110 would be turned on and be sensitive to nearby obstacles. A stand-up counterbalance truck may benefit from obstacle detection in this environment, but for optimal performance for a given application the obstacle detection functionality should not slow the truck down below two miles per hour. When material handling vehicle 110 is in dock area 220 of facility 200, the enable detection parameter can be turned on and the target speed (minsense) parameter can be set to two miles per hour for example. These parameters are more suitable for dock area 220 because typically material handling vehicle 110 may experience moderate traffic in dock area 220. Other parameters such as the delay parameter, the minimum obstacle size parameter, the static buffer parameter, the field width parameter, the pivot angle parameter, and the speed in steer parameter can likewise be adjusted in a similar manner due to the location of material handling vehicle in dock area 220 of facility 200.

A third zone of facility 200 is an open area 230, where ideally the obstacle detection functionality of material handling vehicle 110 would be turned on and be sensitive to nearby obstacles. A stand-up counterbalance truck operating in open area 230 would ideally be slowed to a stop upon detection of an obstacle. When material handling vehicle 110 is in open area 230 of facility 200, the enable detection parameter can be turned on, but the target speed (minsense) parameter can be set to zero miles per hour for example. These parameters are suitable for open area 230 because typically material handling vehicle 110 may experience traffic in open area 230 and is unlikely to be affected by nuisances. Parameters such as the delay parameter, the minimum obstacle size parameter, the static buffer parameter, the field width parameter, the pivot angle parameter, and the speed in steer parameter can likewise be adjusted in a similar manner due to the location of material handling vehicle in open area 230 of facility 200.

A fourth zone of facility 200 is a rack area 240, where ideally the obstacle detection functionality of material handling vehicle 110 would be turned on and would be moderately sensitive to nearby obstacles. When a stand-up counterbalance truck is in-the-aisle, the truck would ideally be slowed but not stopped upon detection of an obstacle. When material handling vehicle 110 is in rack area 240 of facility 200, the enable detection parameter can be turned on and the target speed (minsense) parameter can be set to one mile per hour for example. These parameters are suitable for rack area 240 because typically material handling vehicle 110 can experience moderate traffic in rack area 240. Other parameters such as the delay parameter, the minimum obstacle size parameter, the static buffer parameter, the field width parameter, the pivot angle parameter, and the speed in steer parameter can likewise be adjusted in a similar manner due to the location of material handling vehicle in rack area 240 of facility 200.

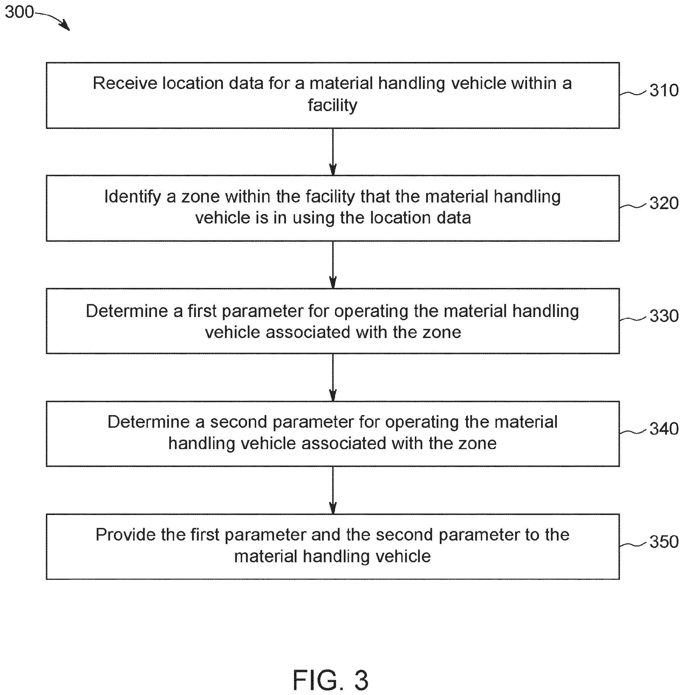

Referring to FIG. 3, a flow diagram of an example process 300 for controlling obstacle detection functionality of a material handling vehicle based on location is shown. Process 300 can be performed using system 100 as implemented in facility 200, for example. Process 300 can use location sensing technology in combination with obstacle sensing technology to apply different sensing configurations as a function of the location of material handling vehicle 110. Multiple operational parameters such as target speed, delay, minimum obstacle size, static buffer, field width, pivot angle, and speed in steer can be adjusted using process 300. The sensing configurations can also be modified as a function of other known obstacles in the environment. Process 300 enables any configuration parameter for material handling vehicle 110 to be altered as a function of the location of the material handling vehicle 110.

Process 300 is shown to include receiving location data for a material handling vehicle within a facility at step 310. For example, controller 120 can be configured to receive location data for material handling vehicle 110 from location tag 140. Location tag 140 can also be in communication with the broader location system 150 to generate precise location data. The location data can include two-dimensional coordinates indicative of the location of material handling vehicle within facility 200, for example. In some implementations, controller 120 can report the location data to server 160 for broader analysis.

At step 320, process 300 is also shown to include identifying a zone within the facility that the material handling vehicle is in using the location data. For example, one or more of controller 120, location system 150, and/or server 160 can be configured to identify which zone of facility 200 that material handling vehicle 110 is in using the location data. Material handling vehicle 110 can be in trailer area 210 of facility 200, where there may be less traffic. Material handling vehicle 110 can also be in dock area 220 of facility 200, where there may be more traffic. Material handling vehicle 110 can also be in open area 230 of facility 200, where traffic might be light, but obstacle detection is still desirable and unlikely to cause nuisances. Material handling vehicle 110 can also be in rack area 240 of facility 200, where traffic is moderate, and a moderate level of obstacle detection functionality is desired. Depending on the type of facility, different types of zones can be established to improve operational efficiency.

At step 330, process 300 is also shown to include determining a first parameter for operating the material handling vehicle associated with the identified zone. For example, the first parameter can be the enable detection parameter. The enable detection parameter can be switched off if material handling vehicle 110 is in trailer area 210 of facility 200 and switched on if material handling vehicle 110 is in dock area 220, open area 230, or rack area 240 of facility 200. The first parameter can also be other types of parameters such as the target speed parameter, the delay parameter, the minimum obstacle size parameter, the static buffer parameter, the field width parameter, the pivot angle parameter, and the speed in steer parameter. The first parameter can be determined by one or more of controller 120, location system 150, and/or server 160, for example.

At step 340, process 300 is also shown to include determining a second parameter for operating the material handling vehicle associated with the identified zone. For example, the second parameter can be the target speed parameter and can be adjusted based on whether material handling vehicle 110 is in trailer area 210, dock area 220, open area 230, or rack area 240 of facility 200. The second parameter can also be other types of parameters such as the enable detection parameter, the delay parameter, the minimum obstacle size parameter, the static buffer parameter, the field width parameter, the pivot angle parameter, and the speed in steer parameter. The second parameter can also be determined by one or more of controller 120, location system 150, and/or server 160, for example.

Process 300 is also shown to include providing the first parameter and the second parameter to the material handling vehicle, at step 350. For example, controller 120 can provide configuration data to sensor 130 on material handling vehicle 110 via Ethernet communications and/or can provide commands to other components of material handling vehicle 110 via CAN bus communications. As such, the obstacle detection system of material handling vehicle 110 can operate in accordance with the first parameter and the second parameter. Additional parameters can also be controlled and provided to material handling vehicle 110 based on the location of material handling vehicle 110 within a facility.

The skilled person will appreciate that various adaptations of system 100 and process 300 are contemplated and possible for the many different use cases of material handling vehicles. Another example scenario is a pallet truck that travels throughout a facility, where small products are regularly located within only certain areas of the facility. In the areas where the small products are regularly located, the pallet truck can be configured to detect all obstacle greater than 70 millimeters wide, for example. In other areas, the pallet truck can be configured to only detect obstacles greater than 350 millimeters wide to limit the number of nuance slowdowns. As another example, if the obstacle detection system on a material handling vehicle can calculate the distance to a nearby obstacle, a minimum distance can be established (e.g., 10 meters) between the material handling vehicle and the obstacle. If the distance between the obstacle and the material handling vehicle falls below the minimum, the target speed parameter can be adjusted to a lower value, and/or the field width parameter can be adjusted.

Risk assessments can be performed for different facilities to configure and manage different region types for different facilities (like the zones of facility 200). Each region can have a corresponding default performance and provide the ability to modify the default performance as needed, for example by an application engineer. The regions can be configured to nest response zones, such as end of aisle zones. The obstacle detection system can be made aware of the current region status from the location system in a variety of manners. The location system can communicate the location data via CAN, and the obstacle detection system can obtain a location map of the different regions to determine the current region. Also, location tags can be configured to determine region information, and communicate the region information via CAN. Moreover, the location system zone processing can migrate to the same controller as the obstacle detection system, and zone information, lidar information, truck information, and all other information can be communicated via inter-process communication.

For certain types of vehicles there are training requirements imposed by various government agencies, laws, rules and regulations. For example, the United States Department of Labor Occupational Safety and Health Administration (OSHA) imposes a duty on employers to train and supervise operators of various types of material handling vehicles. Recertification every three years is also required. In certain instances, refresher training in relevant topics shall be provided to the operator when required. In all instances, the operator remains in control of the material handling vehicle during performance of any actions. Further, a warehouse manager remains in control of the fleet of material handling vehicles within the warehouse environment. The training of operators and supervision to be provided by warehouse managers requires among other things proper operational practices including among other things that an operator remain in control of the material handling vehicle, pay attention to the operating environment, and always look in the direction of travel.

While various spatial and directional terms, such as top, bottom, lower, mid, lateral, horizontal, vertical, front, and the like may be used to describe examples of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

Within this specification, aspects have been described in a way which enables a clear and concise specification to be written, but it is intended and will be appreciated that aspects may be variously combined or separated without parting from the present disclosure. For example, it will be appreciated that all preferred features described herein are applicable to all aspects of the disclosed technology described herein.

Thus, while the disclosed technology has been described in connection with particular aspects and examples, the disclosed technology is not necessarily so limited, and that numerous other aspects, examples, uses, modifications and departures from the aspects, examples, and uses are intended to be encompassed by the claims attached hereto. The entire disclosure of each patent and publication cited herein is incorporated by reference, as if each such patent or publication were individually incorporated by reference herein.

Various features and advantaged of the present disclosure are set forth in the following claims.

## Claims

1. A material handling vehicle (110), comprising:
a sensor (130) for gathering data associated with the material handling vehicle; and
a controller (120) comprising circuitry configured to:
determine a location of the material handling vehicle within a facility (200) using the data from the sensor;
determine a first parameter for operating the material handling vehicle based on a zone (210, 220, 230, 240) within the facility associated with the location;
determine a second parameter for operating the material handling vehicle based on the zone within the facility associated with the location; and
control operation of the material handling vehicle in accordance with the first parameter and the second parameter.

2. The material handling vehicle (110) of claim 1, wherein the first parameter comprises an enable detection parameter that turns obstacle detection functionality for the material handling vehicle on or off, and wherein the second parameter comprises a target speed parameter that controls a speed of the material handling vehicle.

3. The material handling vehicle (110) of any of the claims 1 or 2, wherein the sensor (130) comprises a location tag (140) installed on the material handling vehicle for determining two-dimensional coordinates indicative of the location of the material handling vehicle within the facility.

4. The material handling vehicle (110) of claim 3, wherein the location tag (140) comprises circuitry configured to communicate with a plurality of network anchors in communication with a location server to determine the location of the material handling vehicle within the facility.

5. The material handling vehicle (110) of any of the claims 1 to 4, wherein the circuitry of the controller is further configured to transmit the location of the material handling vehicle to a server via a network and receive the first parameter and the second parameter from the server.

6. The material handling vehicle (110) of any of the claims above, wherein the sensor (130) comprises a lidar sensor, and wherein the controller comprises a display.

7. The material handling vehicle (110) of any of the claims above, wherein the first parameter comprises an enable detection parameter that turns obstacle detection functionality for the material handling vehicle on or off, and wherein the second parameter comprises a delay parameter that controls an amount of time required to elapse before changing a speed of the material handling vehicle.

8. A method (300) for operating a material handling vehicle (110), comprising:
receiving location data for the material handling vehicle within a facility (200);
identifying a zone (210, 220, 23 0, 240) within the facility that the material handling vehicle is in using the location data;
determining a first parameter for operating the material handling vehicle associated with the zone within the facility;
determining a second parameter for operating the material handling vehicle associated with the zone within the facility; and
providing the first parameter and the second parameter to the material handling vehicle for operation of the material handling vehicle in accordance with the first parameter and the second parameter.

9. The method of claim 8, wherein receiving the location data for the material handling vehicle within the facility comprises receiving the location data from a location tag (140) installed on the material handling vehicle for determining two-dimensional coordinates indicative of the location of the material handling vehicle within the facility (200).

10. The method of claim 8 or 9, wherein determining the first parameter comprises determining an enable detection parameter that turns obstacle detection functionality for the material handling vehicle on or off, and wherein determining the second parameter comprises determining a target speed parameter that controls a speed of the material handling vehicle.

11. The method of any of the claims 8 - 10, wherein determining the first parameter comprises determining an enable detection parameter that turns obstacle detection functionality for the material handling vehicle on or off, and wherein determining the second parameter comprises determining a minimum obstacle size parameter that controls a speed of the material handling vehicle based on a size of an obstacle detected by the material handling vehicle.

12. The method of any of the claims 8 - 11, wherein determining the first parameter comprises determining an enable detection parameter that turns obstacle detection functionality for the material handling vehicle on or off, and wherein determining the second parameter comprises determining a pivot angle parameter that controls an amount of time associated with pivoting the material handling vehicle after detecting an obstacle.

13. The method of any of the claims 8 - 12, wherein determining the first parameter comprises determining an enable detection parameter that turns obstacle detection functionality for the material handling vehicle on or off, and wherein determining the second parameter comprises determining a field width parameter that controls a size of a detection area for detecting obstacles associated with the material handling vehicle.

14. The method of any of the claims 8 - 13, wherein determining the first parameter comprises determining an enable detection parameter that turns obstacle detection functionality for the material handling vehicle on or off, and wherein determining the second parameter comprises determining a delay parameter that controls an amount of time required to elapse before changing a speed of the material handling vehicle.

15. The method of claim 10, wherein:
identifying the zone within the facility (200) comprises identifying the zone as a dock area (220) within a warehouse;
determining the first parameter comprises turning on the enable detection parameter; and
determining the second parameter comprises setting the target speed parameter to two miles per hour.
